(19) Europäisches Patentamt
European Patent Office
Office européen des brevets

(11) **EP 3 677 999 B1**

(12) **EUROPEAN PATENT SPECIFICATION**

(45) Date of publication and mention
of the grant of the patent:
**22.05.2024   Bulletin 2024/21**

(21) Application number: **19217240.1**

(22) Date of filing: **03.09.2014**

(51) International Patent Classification (IPC):
**G06F 3/0362** *(2013.01)*      **G04G 21/00** *(2010.01)*
**G06F 1/16** *(2006.01)*        **G06F 3/01** *(2006.01)*
**G06F 3/0482** *(2013.01)*      **G06F 3/0485** *(2022.01)*
**G06F 3/04817** *(2022.01)*     **G06F 3/04883** *(2022.01)*

(52) Cooperative Patent Classification (CPC):
**G06F 1/163; G06F 3/04817; G06F 3/0482;
G06F 3/0485; G06F 3/04883**

(54) **USER INTERFACE OBJECT MANIPULATIONS IN A USER INTERFACE**

MANIPULATIONEN VON BENUTZERSCHNITTSTELLENOBJEKTEN IN EINER
BENUTZERSCHNITTSTELLE

MANIPULATION D'OBJETS D'INTERFACE UTILISATEUR DANS UNE INTERFACE UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2013   US 201361959851 P
03.09.2013   US 201361873359 P
03.09.2013   US 201361873360 P
03.09.2013   US 201361873356 P**

(43) Date of publication of application:
**08.07.2020   Bulletin 2020/28**

(62) Document number(s) of the earlier application(s) in
accordance with Art. 76 EPC:
**14772002.3 / 3 042 271**

(73) Proprietor: **Apple Inc.**
**Cupertino CA 95014 (US)**

(72) Inventors:
• **Chaudhri, Imran**
**Cupertino, CA  95014 (US)**
• **Zambetti, Nicholas**
**San Francisco, CA  94102 (US)**
• **Foss, Christopher**
**Cupertino, CA  95014 (US)**
• **Dascola, Jonathan R**
**Cupertino, CA  95014 (US)**
• **Dye, Alan C**
**Cupertino, CA  95014 (US)**
• **Guzman, Aurello**
**Cupertino, CA  95014 (US)**
• **Karunamuni, Chanaka G**
**Cupertino, CA  95014 (US)**
• **Kerr, Duncan Robert**
**Cupertino, CA  95014 (US)**
• **Lemay, Stephen O**
**Cupertino, CA  95014 (US)**
• **Maric, Natalia**
**Cupertino, CA  95014 (US)**
• **Wilson, Christopher**
**Cupertino, CA  95014 (US)**
• **Wilson, Eric Lance**
**Cupertino, CA  95014 (US)**
• **Yang, Lawrence Y**
**Cupertino, CA  95014 (US)**
• **Butcher, Gary Ian**
**Cupertino, CA  95014 (US)**

(74) Representative: **Barton, Russell Glen**
**Withers & Rogers LLP
2 London Bridge
London SE1 9RA (GB)**

(56) References cited:
**EP-A1- 1 052 566      EP-A2- 1 850 213
US-A- 5 477 508        US-A1- 2007 296 711
US-B1- 6 266 098       US-B1- 6 661 438**

## Description

CROSS REFERENCE TO RELATED APPLICATIONS

This application claims priority to U.S. Provisional Patent Application Serial No. 61/873,356, filed September 3, 2013, entitled "CROWN INPUT FOR A WEARABLE ELECTRONIC DEVICE"; U.S. Provisional Patent Application Serial No. 61/873,359, filed September 3, 2013, entitled "USER INTERFACE OBJECT MANIPULATIONS IN A USER INTERFACE"; U.S. Provisional Patent Application Serial No. 61/959,851, filed September 3, 2013, entitled "USER INTERFACE FOR MANIPULATING USER INTERFACE OBJECTS"; U.S. Provisional Patent Application Serial No. 61/873,360, filed September 3, 2013, entitled "USER INTERFACE FOR MANIPULATING USER INTERFACE OBJECTS WITH MAGNETIC PROPERTIES"; and U.S. Non-provisional Patent Application Serial No. 14/476,657, filed September 3, 2014, entitled "USER INTERFACE FOR MANIPULATING USER INTERFACE OBJECTS WITH MAGNETIC PROPERTIES".

This application is related to co-pending applications U.S. Non-provisional Patent Application filed September 3, 2014, concurrently herewith, entitled "CROWN INPUT FOR A WEARABLE ELECTRONIC DEVICE," naming Nicholas Zambetti et al. as inventors; U.S. Non-provisional Patent Application filed September 3, 2014, concurrently herewith, entitled "USER INTERFACE FOR MANIPULATING USER INTERFACE OBJECTS", naming Nicholas Zambetti et al. as inventors; U.S. Non-provisional Patent Application Serial No. 14/476,657, filed September 3, 2014, entitled "USER INTERFACE OBJECT MANIPULATIONS IN A USER INTERFACE"; and U.S. Provisional Patent Application Serial No. 61/747,278, filed December 29, 2012, entitled "Device, Method, and Graphical User Interface for Manipulating User Interface Objects with Visual and/or Haptic Feedback".

### Field

This disclosure relates generally to user interfaces and, more specifically, to user interfaces using a crown input mechanism.

### Background

Advanced personal electronic devices can have small form factors. These personal electronic devices include, but are not limited to, tablets and smart phones. Use of such personal electronic devices involves manipulation of user interface objects on display screens which also have small form factors that complement the design of the personal electronic devices.

Exemplary manipulations that users can perform on personal electronic devices include navigating a hierarchy, selecting a user interface object, adjusting the position, size, and zoom of user interface objects, or otherwise manipulating user interfaces. Exemplary user interface objects include digital images, video, text, icons, maps, control elements such as buttons, and other graphics. A user can perform such manipulations in image management software, video editing software, word pressing software, software execution platforms such as an operating system's desktop, website browsing software, and other environments.

Existing methods for manipulating user interface objects on reduced-size touch-sensitive displays can be inefficient. Further, existing methods generally provide less precision than is preferable. Known art includes US 5477508 A, which describes control of a digital watch using a menu and a thumbwheel.

### Summary

Systems and processes for manipulating a graphical user interface are disclosed. One process can include receiving user input through a crown to rotate a virtual object. The process includes selecting a surface of the object from among the multiple surfaces of the object in response to determining that the crown rotation exceeded a speed threshold.

### Brief Description of the Drawings

The present application can be best understood by reference to the following description taken in conjunction with the accompanying drawing figures, in which like parts may be referred to by like numerals.

FIG. 1 illustrates an exemplary wearable electronic device according to various examples.
FIG. 2 illustrates a block diagram of an exemplary wearable electronic device according to various examples.
FIGs. 3-12 illustrate an exemplary graphical user interface showing the selection of a surface of a two-sided object in response to a rotation of a crown.

FIG. 13 illustrates an exemplary process for selecting a surface of a two-sided object in response to a rotation of a crown.

FIGs. 14-23 illustrate an exemplary graphical user interface showing the selection of a surface of an object in response to a rotation of a crown.

FIG. 24 illustrates an exemplary process for selecting a surface of an object in response to a rotation of a crown.

FIG. 25 illustrates an exemplary multi-sided object in a graphical user interface.

FIG. 26 illustrates an exemplary computing system for manipulating a user interface in response to a rotation of a crown according to various examples.

## Detailed Description

In the following description of the disclosure and examples, reference is made to the accompanying drawings in which it is shown by way of illustration specific examples that can be practiced. It is to be understood that other examples can be practiced and structural changes can be made without departing from the scope of the disclosure.

Many personal electronic devices have graphical user interfaces with options that can be activated in response to user inputs. Typically, a user can select and activate a particular option from among multiple options. For example, a user may select an option by placing a mouse cursor over the desired option using a pointing device. The user may activate the option by clicking a button of the pointing device while the option is selected. In another example, a user may select and activate an option displayed on a touch-sensitive display (also known as a touch screen) by touching the touch-sensitive display at the location of the displayed option. Given the inefficiency of existing methods for selecting options on reduced-size touch-sensitive displays, there is a need for methods that enable users to more efficiently and conveniently select a desired option in a graphical user interface environment.

The examples below describe improved techniques for selecting a surface of a user interface object in a graphical user interface using user inputs. More specifically, these techniques use a physical crown as an input device to enable a user to select a desired option by selecting a surface of the user interface object. As a result, the examples described below allow a user to more efficiently and conveniently select a desired option.

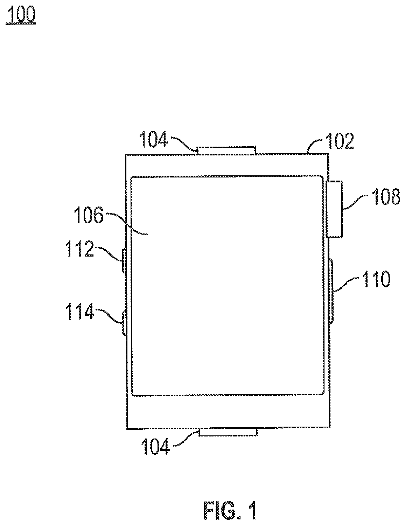

FIG. 1 illustrates exemplary personal electronic device 100. In the illustrated example, device 100 is a watch that generally includes body 102 and strap 104 for affixing device 100 to the body of a user. That is, device 100 is wearable. Body 102 can designed to couple with straps 104. Device 100 can have touch-sensitive display screen (hereafter touchscreen) 106 and crown 108. Device 100 can also have buttons 110, 112, and 114.

Conventionally, the term 'crown,' in the context of a watch, refers to the cap atop a stem for winding the watch. In the context of a personal electronic device, the crown can be a physical component of the electronic device, rather than a virtual crown on a touch sensitive display. Crown 108 can be mechanical meaning that it can be connected to a sensor for converting physical movement of the crown into electrical signals. Crown 108 can rotate in two directions of rotation (e.g., forward and backward). Crown 108 can also be pushed in towards the body of device 100 and/or be pulled away from device 100. Crown 108 can be touch-sensitive, for example, using capacitive touch technologies that can detect whether a user is touching the crown. Moreover, crown 108 can further be rocked in one or more directions or translated along a track along an edge or at least partially around a perimeter of body 102. In some examples, more than one crown 108 can be used. The visual appearance of crown 108 can, but need not, resemble crowns of conventional watches. Buttons 110, 112, and 114, if included, can each be a physical or a touch-sensitive button. That is, the buttons may be, for example, physical buttons or capacitive buttons. Further, body 102, which can include a bezel, may have predetermined regions on the bezel that act as buttons.

Display 106 can include a display device, such as a liquid crystal display (LCD), light-emitting diode (LED) display, organic light-emitting diode (OLED) display, or the like, positioned partially or fully behind or in front of a touch sensor panel implemented using any desired touch sensing technology, such as mutual-capacitance touch sensing, self-capacitance touch sensing, resistive touch sensing, projection scan touch sensing, or the like. Display 106 can allow a user to perform various functions by touching over hovering near the touch sensor panel using one or more fingers or other object.

In some examples, device 100 can further include one or more pressure sensors (not shown) for detecting a force or pressure applied to the display. The force or pressure applied to display 106 can be used as an input to device 100 to perform any desired operation, such as making a selection, entering or exiting a menu, causing the display of additional options/actions, or the like. In some examples, different operations can be performed based on the amount of force or pressure being applied to display 106. The one or more pressure sensors can further be used to determine a position that the force is being applied to display 106.

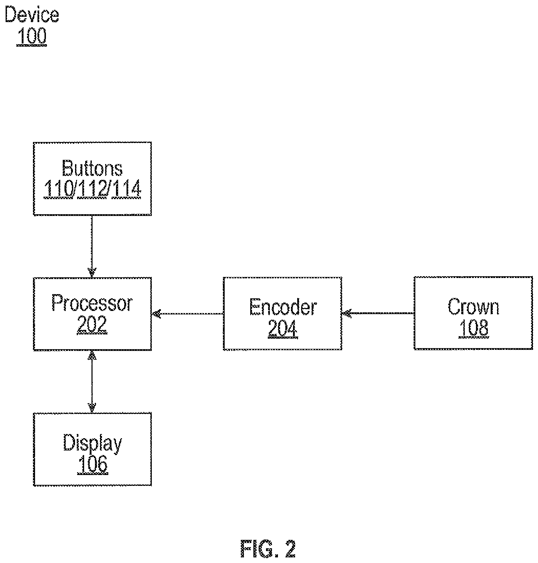

FIG. 2 illustrates a block diagram of some of the components of device 100. As shown, crown 108 can be coupled to encoder 204, which can be configured to monitor a physical state or change of state of crown 108 (e.g., the position of the crown), convert it to an electrical signal (e.g., convert it to an analog or digital signal representation of the position or change in position of crown 108), and provide the signal to processor 202. For instance, in some examples, encoder 204 can be configured to sense the absolute rotational position (e.g., an angle between 0-360°) of crown 108 and output an analog or digital representation of this position to processor 202. Alternatively, in other examples, encoder 204 can be configured to sense a change in rotational position (e.g., a change in rotational angle) of crown 108 over some sampling period and to output an analog or digital representation of the sensed change to processor 202. In these examples, the crown position information can further indicate a direction of rotation of the crown (e.g., a positive value can correspond to one direction and a negative value can correspond to the other). In yet other examples, encoder 204 can be configured to detect a rotation of crown 108 in any desired manner (e.g., velocity, acceleration, or the like) and can provide the crown rotational information to processor 202. In alternative examples, instead of providing information to processor 202, this information can be provided to other components of device 100. While the examples described herein refer to the use of rotational position of crown 108 to control scrolling, scaling, or an objects position, it should be appreciated that any other physical state of crown 108 can be used.

In some examples, the physical state of the crown can control physical attributes of display 106. For example, if crown 108 is in a particular position (e.g., rotated forward), display 106 can have limited z-axis traversal ability. In other words, the physical state of the crown can represent physical modal functionality of display 106. In some examples, a temporal attribute of the physical state of crown 108 can be used as an input to device 100. For example, a fast change in physical state can be interpreted differently than a slow change in physical state.

Processor 202 can be further coupled to receive input signals from buttons 110, 112, and 114, along with touch signals from touch-sensitive display 106. The buttons may be, for example, physical buttons or capacitive buttons. Further, body 102, which can include a bezel, may have predetermined regions on the bezel that act as buttons. Processor 202 can be configured to interpret these input signals and output appropriate display signals to cause an image to be produced by touch-sensitive display 106. While a single processor 202 is shown, it should be appreciated that any number of processors or other computational devices can be used to perform the general functions discussed above.

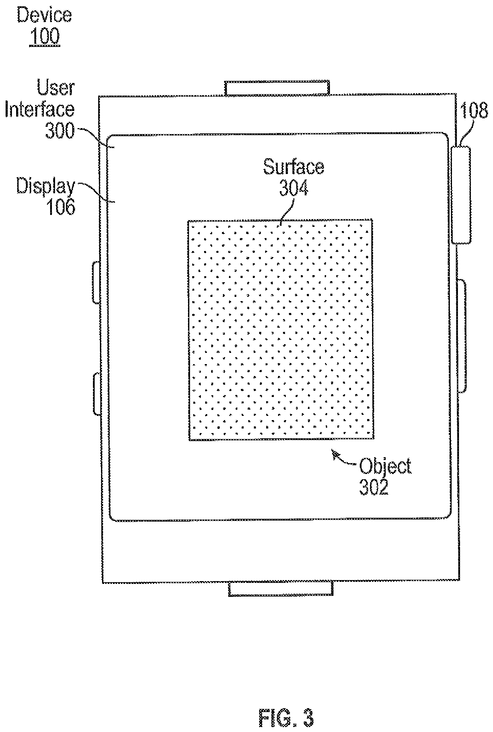

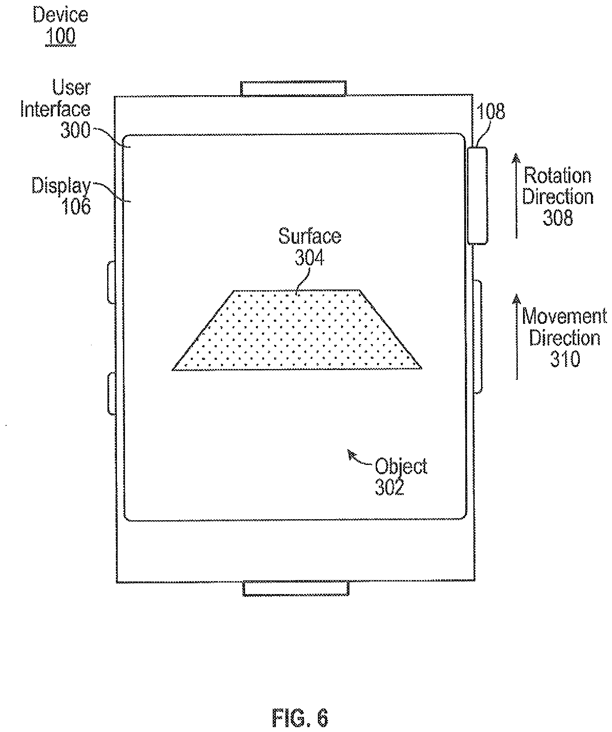

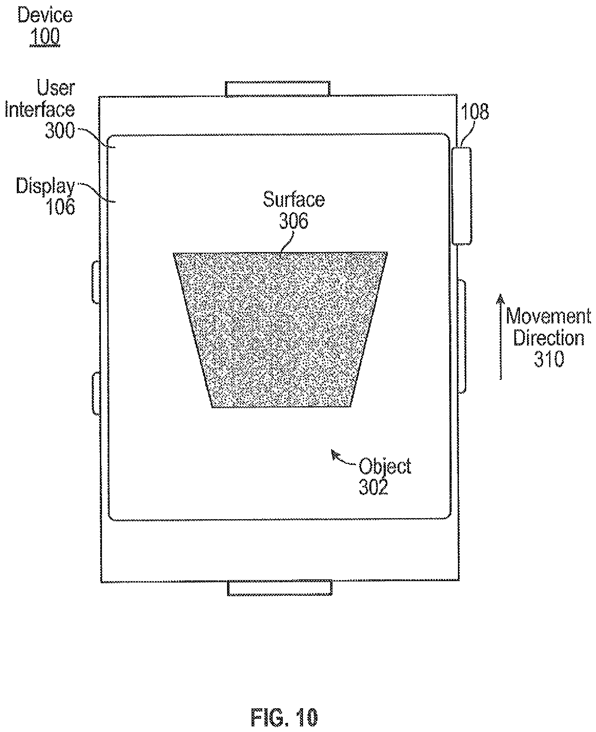

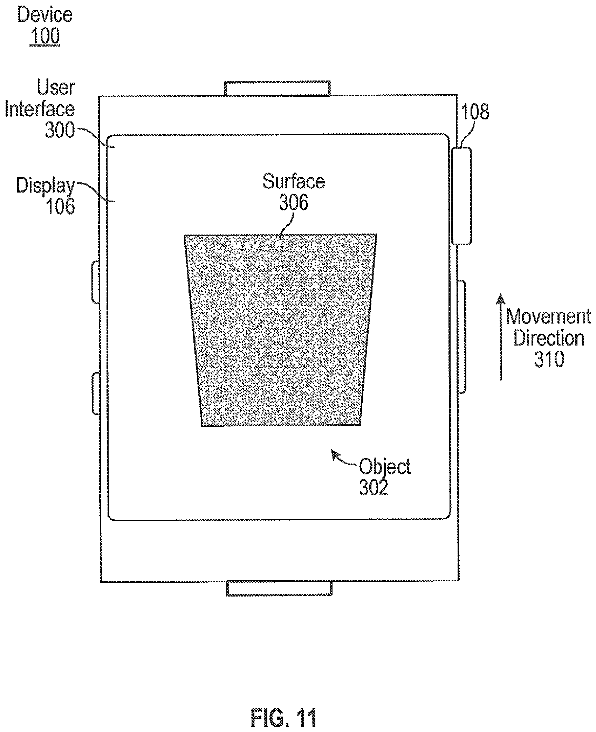

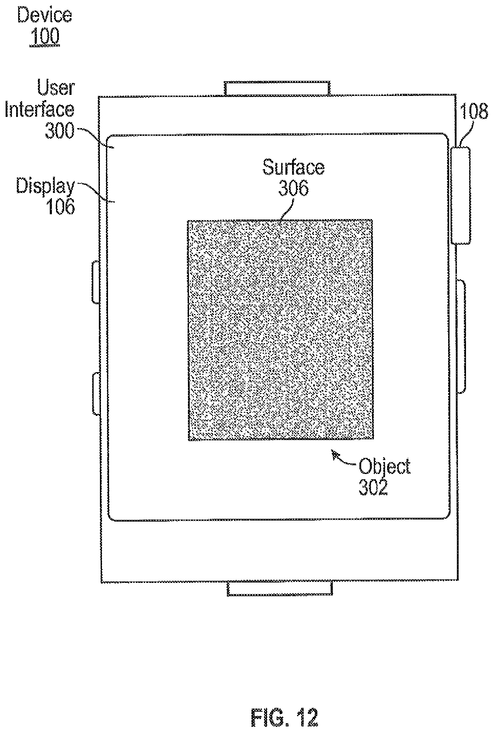

FIGs. 3-12 illustrate an exemplary user interface 300 displaying a two-sided user interface object 302. Object 302 has a first surface 304 and a second surface 306. Each surface of object 302 is a selectable surface associated with corresponding data. The data may be, for example, text, an image, an application icon, an instruction, a binary ON or OFF option, and the like. A user can select a surface from among the multiple selectable surfaces of object 302 by using a physical crown of a wearable electronic device to rotate object 302 to align the desired selection surface such that the surface is parallel to the display 106 of the device 100 and is displayed on the display 106. The system is designed to transition between one surface to another, rather than stopping in between surfaces. Although examples are described with respect to object surfaces (or planes) being parallel to display 106, the examples can also be modified to instead be described with respect to object surfaces (or planes) facing the viewer of display 106. This modification may be particularly helpful when object surfaces or display 106 is not plane surface.

Crown 108 of device 100 is a user rotatable user interface input. The crown 108 can be turned in two distinct directions: clockwise and counterclockwise. FIGs. 3-12 include rotation direction arrows illustrating the direction of crown rotation and movement direction arrows illustrating the direction of rotation of a user interface object, where applicable. The rotation direction arrows and movement direction arrows are typically not part of the displayed user interface, but are provided to aid in the interpretation of the figures. In this example, a clockwise direction rotation of crown 108 is illustrated by a rotation direction arrow pointing in the up direction. Similarly, a counterclockwise direction rotation of crown 108 is illustrated by a rotation direction arrow pointing in the down direction. The characteristics of the rotation direction arrow are not indicative of the distance, speed, or acceleration with which crown 108 is rotated by a user. Instead, the rotation direction arrow is indicative of the direction of rotation of crown 108 by the user.

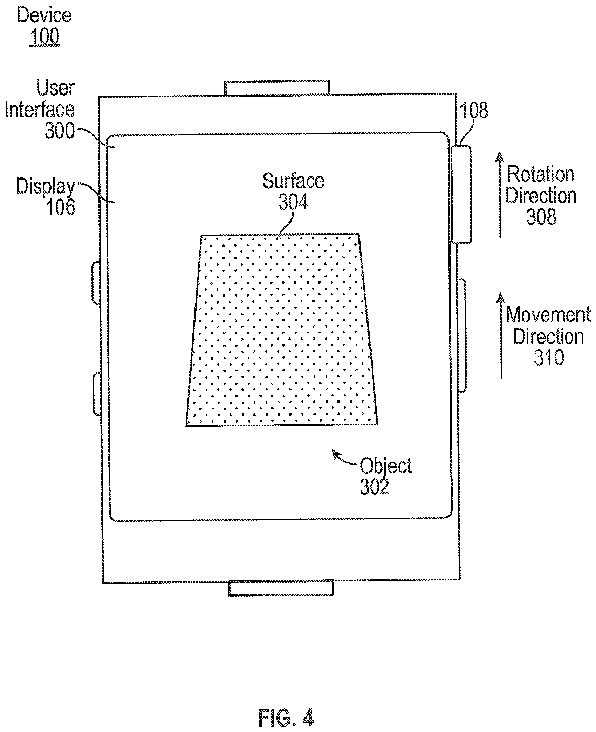

At FIG. 3, first surface 304 of object 302 is aligned parallel to display 106 and is displayed, indicating selection of first surface 304. The selected first surface 304 can be activated through, for example, an additional user input. At FIG. 4, device 100 determines a change in the position of crown 108 in the clockwise direction, as indicated by rotation direction arrow 308. Device 100 determines a rotational speed and a direction based on the determined change in the position of crown 108. In response to determining the change in the position of crown 108, the device rotates object 302, as indicated by movement direction arrow 310 and illustrated in FIG. 4. The rotation of object 302 is based on the determined rotational speed and direction. Rotational speed may be expressed in numerous ways. For example, rotational speed may be expressed as hertz, as rotations per unit of time, as rotations per frame, as revolutions per unit of time, as revolutions per frame, as a change in angle per unit of time, and the like. In one example, object 302 may be associated with a mass or may have a calculated rotational inertia.

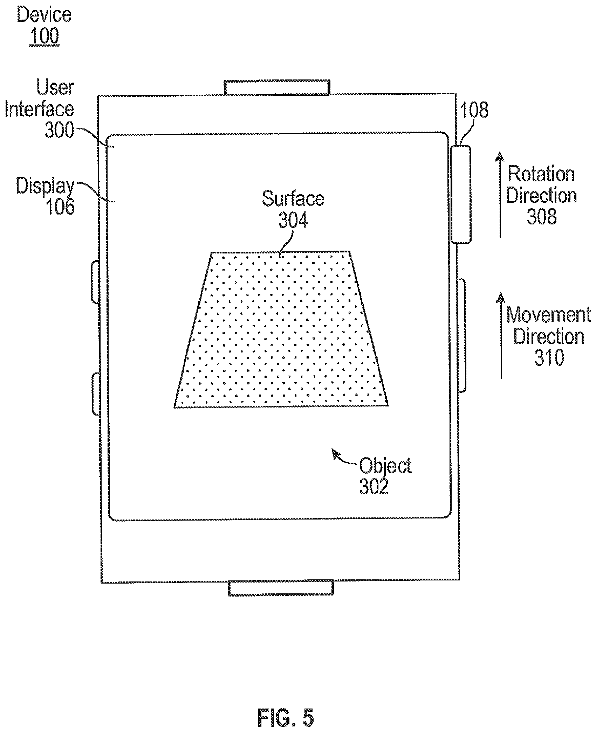

At FIGs. 5-7, device 100 continues to determine a change in the position of crown 108 in the clockwise direction, as indicated by rotation direction arrow 308. Device 100 determines a rotational speed and a direction based on the determined change in the position of crown 108. In response to determining the change in the position of crown 108, the device continues to rotate object 302, as indicated by movement direction arrow 310 and illustrated in FIG. 5-6. The rotation of object 302 is based on the determined rotational speed and direction.

In one example, the degrees of rotation of object 302, as measured from the object's position while parallel to display 106, is based on the determined speed. For easier visualization, object 302 can be thought of as having some similar qualities as an analog tachometer. As the determined speed increases, the degree of rotation of object 302 increases. In this example, if the rotation of crown 108 is maintained at a constant speed, object 302 will stay at a static rotated position that is not parallel to display 106. If the speed of the rotation of crown 108 is increased, the determined speed will increase and object 302 will rotate an additional amount.

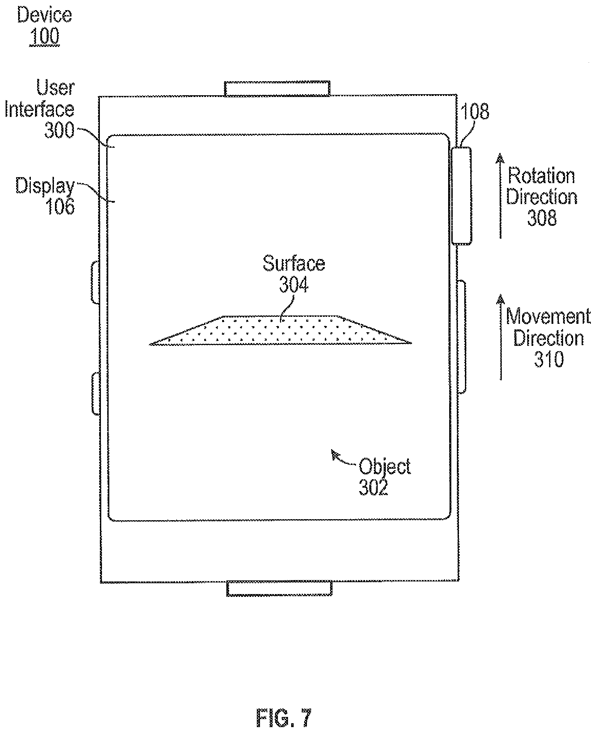

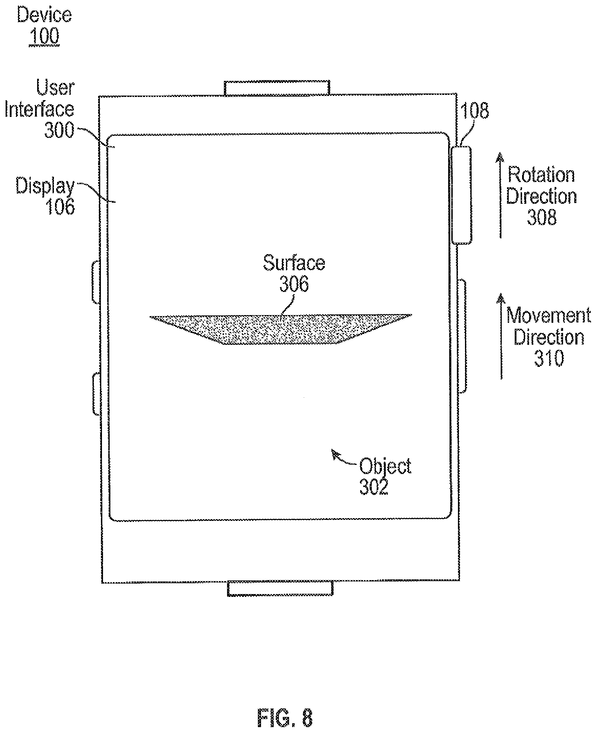

In some examples, object 302 is configured to become perpendicular to display 106 in response to the determined speed being at a speed threshold. When the determined speed exceeds the speed threshold, object 302 exceeds a total rotation of 90 degrees, causing first surface 304 of object 302 to no longer be displayed and instead causing second surface 306 of object 302 to be displayed. This transition between the display of first surface 304 and second surface 306 is illustrated as the transition between FIGs. 7 and 8. Thus, as the determined speed exceeds the speed threshold the object 302 flips from one side to another side.

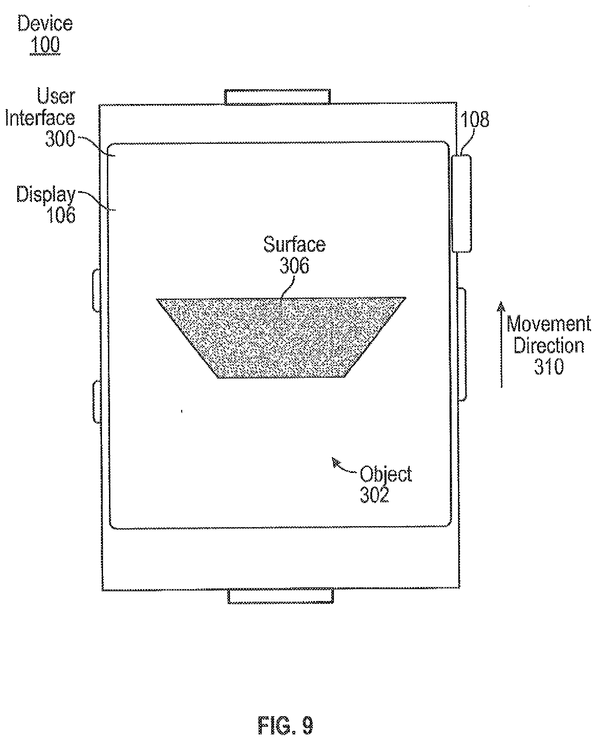

At FIGs. 9-12, device 100 determines that there is no further change in the position of crown 108. As a result of this determination, the rotation of object 302 is changed such that a surface of object 302 is parallel to display 106. This change may be animated, as illustrated in FIGs. 9-12. Device 100 will rotate object 302 such that the surface of object 302 partially facing display 106 when device 100 determines that there is no change in the position of crown 108 is the surface that will be displayed as being parallel to display 106. When a surface of object 302 is parallel to display 106 and no change in the position of crown 108 is detected, object 302 is in a steady state. An object is in a steady state when the object is not being translated, rotated, or scaled.

In some examples, when object 302 is in a steady state, the displayed surface of object 302 that is parallel to display 106 can be activated with an additional input. The displayed surface that is parallel to display 106 in a steady state is determined to be selected even prior to activation. For example, object 302 may be used as an ON/OFF switch or toggle. First surface 304 is associated with an ON instruction and second surface 306 is associated with an OFF instruction. A user can transition between the ON and OFF states by rotating crown 108 at above a speed threshold, causing object 302 to flip and display a desired surface. The desired surface is determined to be selected when the desired surface is displayed on display 106, is parallel to display 106, and no change in the position of crown 108 is detected.

While a surface is selected, the user can activate the selected surface by one or more of many techniques. For example, the user may press on touch-sensitive display 106, press on touch-sensitive display with a force greater than a predetermined threshold, press button 112, or simply allow the surface to remain selected for a predetermined amount of time. In another example, when the displayed surface is parallel to display 106, the action can be interpreted as both a selection and an activation of the data associated with the displayed surface.

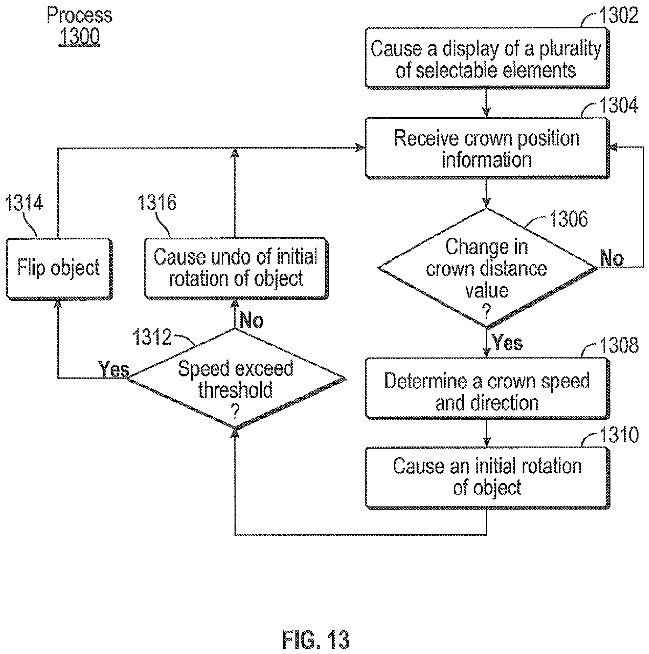

FIG. 13 illustrates an exemplary process for selecting a surface of a two-sided graphical user interface object in response to a rotation of a crown. Process 1300 is performed at a wearable electronic device (e.g., device 100 in FIG. 1) having a physical crown. In some examples, the electronic device also includes a touch-sensitive display. The process provides an efficient technique for selecting a surface of a two-sided, two-dimensional object.

At block 1302, the device causes a display of a two-sided object on a touch-sensitive display of a wearable electronic device. In some examples, the object is two-dimensional. In other examples, the object is three dimensional but only two surfaces are selectable. Each selectable surface of the object is associated with a corresponding data value. The data may be, for example, text, an image, an application icon, an instruction, a binary ON or OFF option, and the like.

At block 1304, the device receives crown position information. The crown position information may be received as a series of pulse signals, real values, integer values, and the like.

At block 1306, the device determines whether a change has occurred in a crown distance value. The crown distance value is based on an angular displacement of the physical crown of the wearable electronic device. A change in the crown distance value is indicative of a user providing input to the wearable electronic device by, for example, turning the physical crown. If the device determines that a change in the crown distance value has not occurred, the system returns to block 1304 and continues receiving crown position information. If the device determines that a change in the crown distance value has occurred, the system continues to block 1308, though the system may continue to receive crown position information.

At block 1308, the device determines a direction and a crown speed. The crown speed is based on the speed of rotation of the physical crown of the wearable electronic device. For example, the determined crown speed may be expressed as hertz, as rotations per unit of time, as rotations per frame, as revolutions per unit of time, as revolutions per frame, and the like. The determined direction is based on a direction of rotation of the physical crown of the wearable electronic device. For example, an up direction can be determined based on a clockwise rotation of the physical crown. Similarly, a down direction can be determined based on a counterclockwise rotation of the physical crown. In other examples, a down direction can be determined based on a clockwise rotation of the physical crown and an up direction can be determined based on a counterclockwise rotation of the physical crown.

At block 1310, in response to determining the change in the crown distance value, the device causes an initial rotation of the two-sided object on the display. The amount of the rotation is based on the determined crown speed. The direction of rotation is based on the determined direction. The rotation may be animated.

At block 1312, the device determines whether the determined crown speed exceeds a speed threshold. If the device determines that the determined crown speed exceeds the speed threshold, the device continues to block 1314. For example, the speed threshold may be thought of as an escape velocity (or escape speed). An escape velocity is the speed at which the kinetic energy plus the gravitational potential energy of an object is zero. If the device determines that the determined crown speed does not exceed the speed threshold, the device transitions to block 1316.

In some examples, the minimum angular velocity of crown rotation that is necessary to reach escape velocity corresponds directly to the instantaneous angular velocity of crown 108 (FIG. 1), meaning that the user interface of device 100, in essence, responds when crown 108 reaches a sufficient angular velocity. In some embodiments, the minimum angular velocity of crown rotation necessary for reaching the escape velocity is a calculated velocity that is based on, but not directly equal to, the instantaneous ("current") angular velocity of crown 108. In these examples, device 100 can maintain a calculated crown (angular) velocity V in discrete moments in time T according to equation 1:

$$V_T = V_{(T-1)} + \Delta V_{CROWN} - \Delta V_{DRAG}. \qquad (EQ. 1)$$

In equation 1, $V_T$ represents a calculated crown velocity (speed and direction) at time T, $V_{(T-1)}$ represents the previous velocity (speed and direction) at time T-1, $\Delta V_{CROWN}$ represents the change in velocity caused by the force being applied through the rotation of the crown at time T, and $\Delta V_{DRAG}$ represents the change in velocity due to a drag force. The force being applied, which is reflected through $\Delta V_{CROWN}$, can depend on the current velocity of angular rotation of the crown. Thus, $\Delta V_{CROWN}$ can also depend on the current angular velocity of the crown. In this way, device 100 can provide user interface interactions based not only on instantaneous crown velocity but also based on user input in the form of crown movement over multiple time intervals, even if those intervals are finely divided. Note, typically, in the absence of user input in the form of $\Delta V_{CROWN}$, $V_T$ will approach (and become) zero based on $\Delta V_{DRAG}$ in accordance with EQ. 1, but $V_T$ would not change signs without user input in the form of crown rotation ($\Delta V_{CROWN}$).

Typically, the greater the velocity of angular rotation of the crown, the greater the value of $\Delta V_{CROWN}$ will be. However, the actual mapping between the velocity of angular rotation of the crown and $\Delta V_{CROWN}$ can be varied depending on the desired user interface effect. For example, various linear or non-linear mappings between the velocity of angular rotation of the crown and $\Delta V_{CROWN}$ can be used.

Also, $\Delta V_{DRAG}$ can take on various values. For example, $\Delta V_{DRAG}$ can depend on the velocity of crown rotation such that at greater velocities, a greater opposing change in velocity ($\Delta V_{DRAG}$) can be produced. In another example, $\Delta V_{DRAG}$ can have a constant value. It should be appreciated that the above-described requirements of $\Delta V_{CROWN}$ and $\Delta V_{DRAG}$ can be changed to produce desirable user interface effects.

As can be seen from EQ. 1, the maintained velocity ($V_T$) can continue to increase as long as $\Delta V_{CROWN}$ is greater than $\Delta V_{DRAG}$. Additionally, $V_T$ can have non-zero values even when no $\Delta V_{CROWN}$ input is being received, meaning that user interface objects can continue to change without the user rotating the crown. When this occurs, objects can stop changing based on the maintained velocity at the time the user stops rotating the crown and the $\Delta V_{DRAG}$ component.

In some examples, when the crown is rotated in a direction corresponding to a rotation direction that is opposite the current user interface changes, the $V_{(T-1)}$ component can be reset to a value of zero, allowing the user to quickly change the direction of the object without having to provide a force sufficient to offset the $V_T$.

At block 1314, the device causes the object to flip past a transition position between a first surface that was last selected and a second surface. For example, the object has flipped past the transition position when the object will not return to having the first surface displayed parallel to the display without receiving additional user input. In the example of a two-sided object, the transition position may be when the surface is perpendicular to the display.

Once the object reaches a steady state, the displayed surface that is parallel to the display can be activated by a designated user input. The displayed surface that is parallel to the display in a steady state is determined to be selected even prior to activation. An object is in a steady state when the object is not being translated, rotated, or scaled. This may result in the first surface of the object no longer being displayed, in the case of a cube-shaped object.

At block 1316, because the escape velocity has not been reached, the device causes the object to at least partially return to the object's initial position at the time of block 1302. For example, part of the initial rotation of the object caused at block 2410 can be negated. To achieve this, the device animates a rotation of the object that is in an opposite direction of the initial rotation at block 1310.

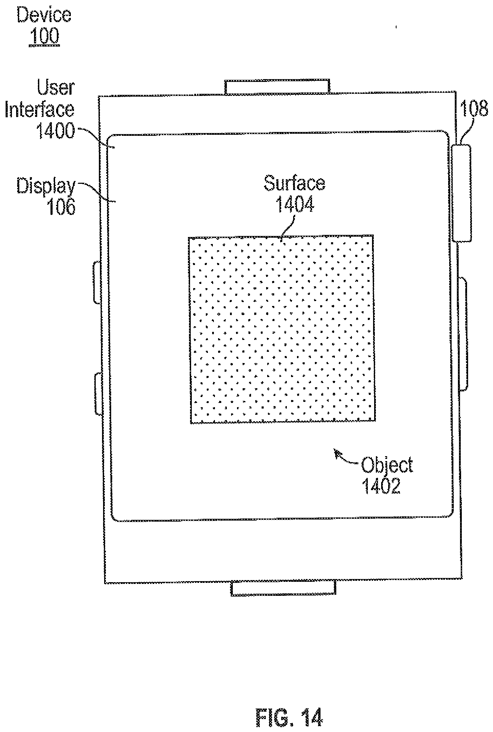

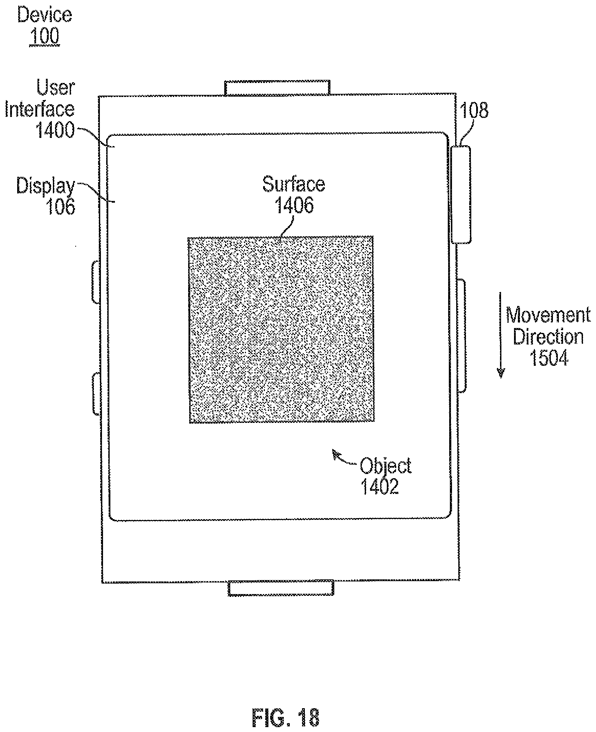

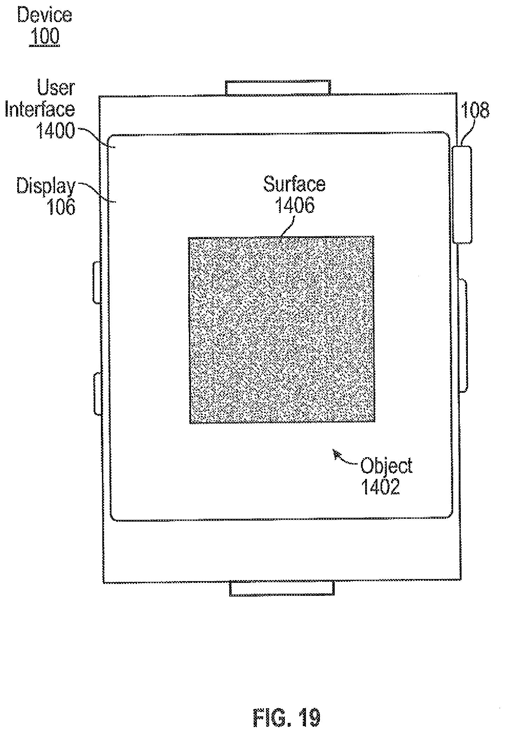

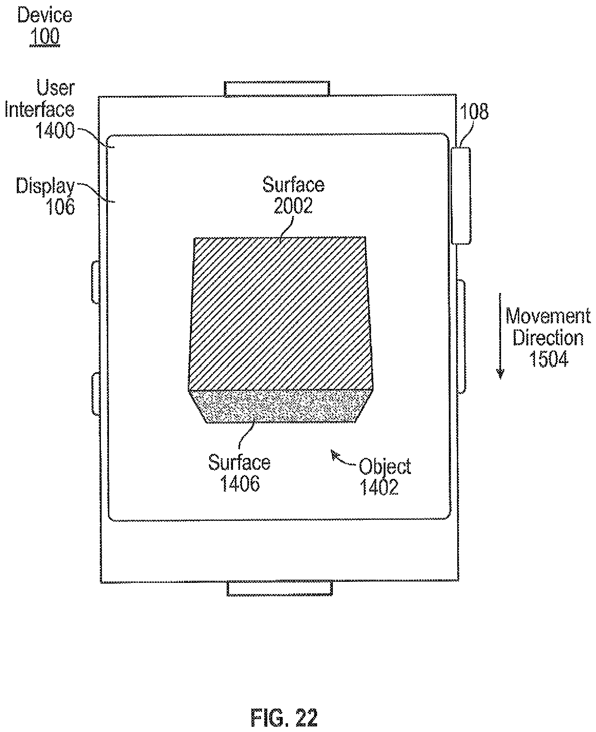

FIGs. 14-23 illustrate an exemplary graphical user interface showing the selection of a surface of a cube object in response to a rotation of a crown. Object 1402 is a cube with six surfaces. In this example, four of the six surfaces are selectable. These four selectable surfaces include surface 1404 of object 1402, which is facing a viewer of display 106, the top surface of object 1402, the bottom surface of object 1402, and the back surface of object 1402. In this example, the left and right surfaces of object 1402 are not selectable. However, the left and right surfaces of object 1402 may be selectable in other examples. Although examples are described with respect to object surfaces (or planes) being parallel to display 106, the examples can also be modified to instead be described with respect to object surfaces (or planes) facing the viewer of display 106. This modification may be particularly helpful when object surfaces or display 106 is not plane surface.

Each selectable surface of object 1402 is associated with corresponding data. The data may be, for example, text, an image, an application icon, an instruction, a quad-state setting (such as Off/Low/Medium/High), and the like. A user can select a surface from among the multiple selectable surfaces of the object 1402 by using a physical crown of a wearable electronic device to rotate object 1402 to align the desired selection surface such that it is parallel to the display 106 and displayed on display 106.

Crown 108 of device 100 is a user rotatable user interface input. The crown 108 can be turned in two distinct directions: clockwise and counterclockwise. FIGs. 14-23 include rotation direction arrows illustrating the direction of crown rotation and movement direction arrows illustrating the direction of rotation of a user interface object, where applicable. The rotation direction arrows and movement direction arrows are typically not part of the displayed user interface, but are provided to aid in the interpretation of the figures. In this example, a clockwise direction rotation of crown 108 is illustrated by a rotation direction arrow pointing in the up direction. Similarly, a counterclockwise direction rotation of crown 108 is illustrated by a rotation direction arrow pointing in the down direction. The characteristics of the rotation direction arrow are not indicative of the distance, speed, or acceleration with which crown 108 is rotated by a user. Instead, the rotation direction arrow is indicative of the direction of rotation of crown 108 by the user.

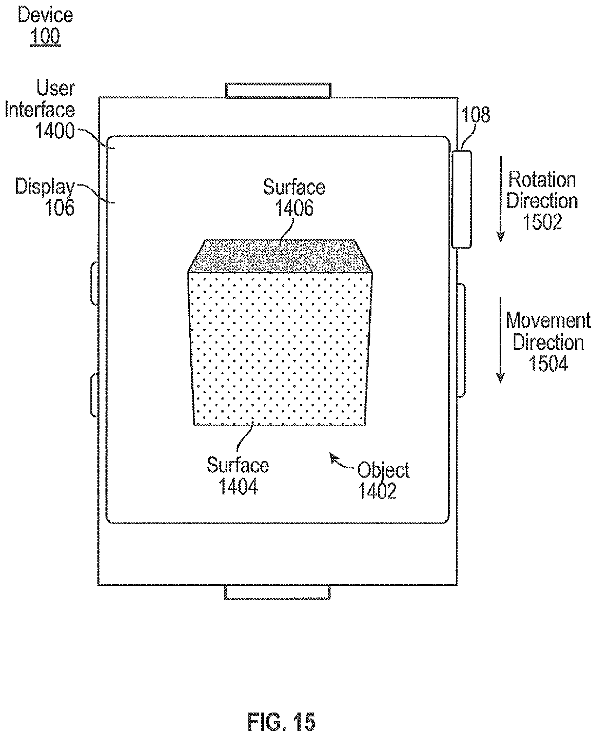

At FIG. 14, first surface 1404 of object 1402 is aligned parallel to display 106 and is displayed, indicating selection of first surface 1404. At FIG. 15, device 100 determines a change in the position of crown 108 in the counterclockwise direction, as indicated by rotation direction arrow 1502. Device 100 determines a rotational speed and a direction based on the determined change in the position of crown 108. In response to determining the change in the position of crown 108, the device rotates object 1402, as indicated by movement direction arrow 1504 and illustrated in FIG. 15. The rotation of object 1402 is based on the determined rotational speed and direction. Rotational speed may be expressed in numerous ways. For example, rotational speed may be expressed as hertz, as rotations per unit of time, as rotations per frame, as revolutions per unit of time, as revolutions per frame, and the like. In one example, object 1402 may be associated with a mass or may have a calculated rotational inertia.

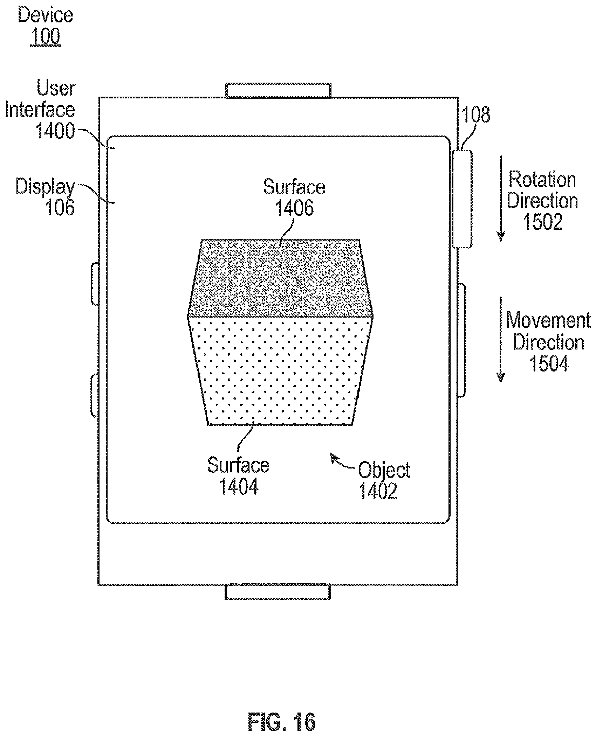

At FIG. 16, device 100 continues to determine a change in the position of crown 108 in the counterclockwise direction, as indicated by rotation direction arrow 1502. Device 100 determines a rotational speed and a direction based on the determined change in the position of crown 108. In response to determining the change in the position of crown 108, the device continues to rotate object 1402, as indicated by movement direction arrow 1504 and illustrated in FIG. 16. The rotation of object 1402 is based on the determined rotational speed and direction.

In one example, the degrees of rotation of object 1402 is based on the determined speed. As the determined speed increases, the degree of rotation of object 1402 increases. In this example, if the rotation of crown 108 is maintained at a constant speed, object 1402 will stay at a static rotated position where no surface of object 1402 is parallel to display 106. If the speed of the rotation of crown 108 is increased, the determined speed will increase and object 1402 will rotate an additional amount.

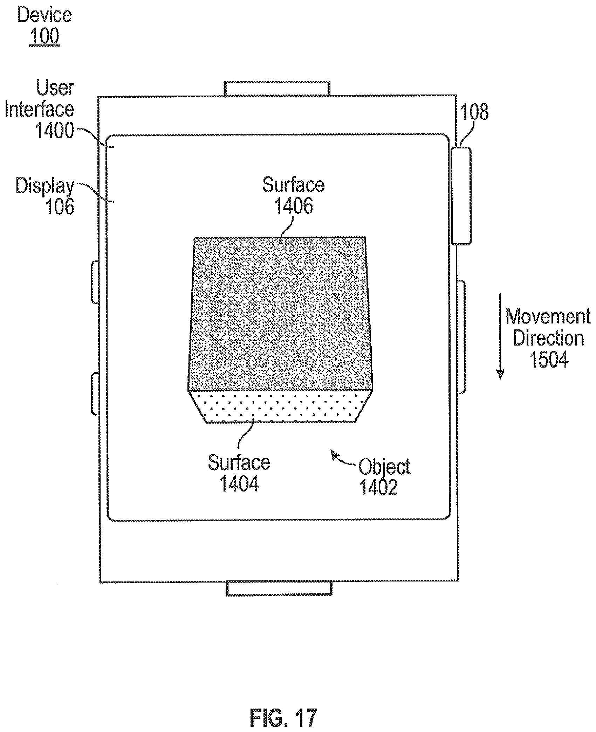

In some examples, object 1402 is configured to rotate to have a surface parallel to display 106 in response to the determined speed being above a speed threshold. When the determined speed exceeds the speed threshold, object 1402 exceeds a rotation of 45 degrees, causing first surface 1404 of object 1402 to rotate away from the display to no longer be displayed and instead causing second surface 1406 of object 1404 rotate toward the display to be displayed. This transition between the display of first surface 1404 and second surface 1406 is illustrated as the transition between FIGs. 16 and 17. Thus, as the determined speed exceeds the speed threshold, the object 1402 flips from one surface to another surface.

At FIGs. 17-18, device 100 determines that there is no change in the position of crown 108. As a result of this determination, object 1402 is rotated such that a displayed surface of object 1402 is parallel to display 106. This rotation may be animated, as illustrated in FIGs. 17-18. Device 100 will rotate object 1402 such that the displayed surface of object 1402 that has the smallest angle with respect to the display is made parallel to the display 106. In other words, the object's surface that best faces the display 106 or is closest to parallel to display 106 is made parallel to the display 106. When a surface of object 1402 is parallel to display 106 and no change in the position of crown 108 is detected, object 1402 is in a steady state. An object is in a steady state when the object is not being translated, rotated, or scaled.

In some examples, when object 1402 is in a steady state, the surface of object 1402 that is parallel to display 106 and displayed on display 106 is determined to be selected. For example, object 1402 may be used as four-phase selection switch. First surface 1404 is associated with a LOW setting instruction and second surface 1406 is associated with a MEDIUM instruction setting. The remaining two selectable surfaces are associated with HIGH and OFF instruction settings. A user can transition between the four settings by rotating crown 108 at above a speed threshold, causing object 1402 to flip and display a desired surface. The desired surface is determined to be selected when the displayed surface is parallel to display 106 and no change in the position of crown 108 is detected.

While a surface is selected, the user can activate the selected surface by one or more of many techniques. For example, the user may press on touch-sensitive display 106, press button 112, or simply allow the surface to remain selected for a predetermined amount of time. In another example, when the displayed surface is parallel to display 106, the action can be interpreted as both a selection and an activation of the data associated with the displayed surface.

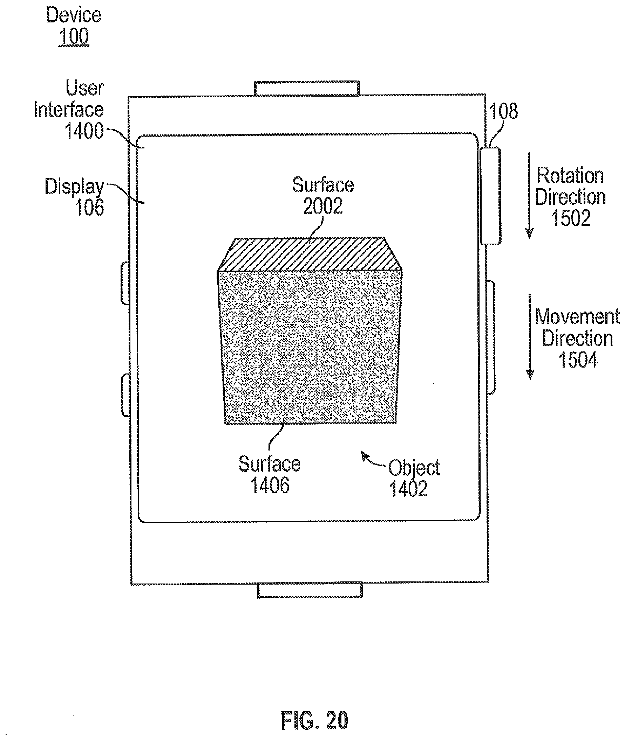

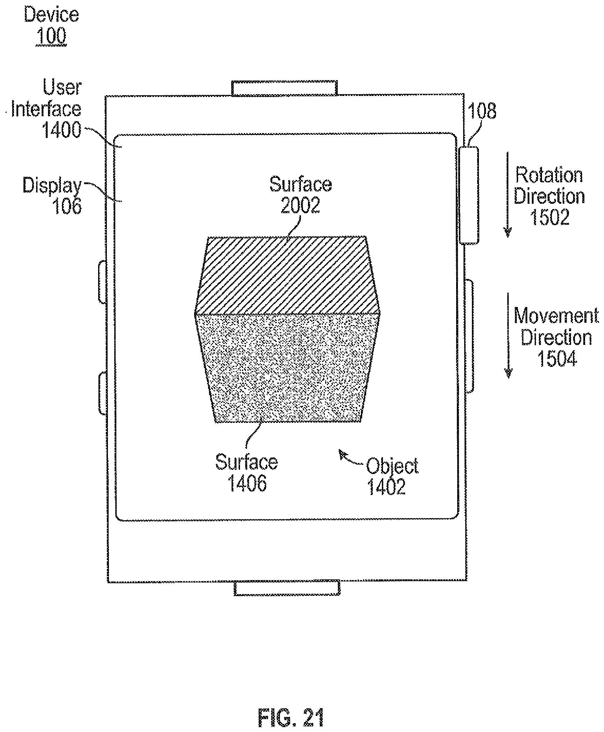

FIGs. 20-23 illustrate a second flip of object 1402 to select third surface 2002 of object 1402. In FIGs. 21-22, device 100 determines a change in the position of crown 108 in the counterclockwise direction, as indicated by rotation direction arrow 1502. Device 100 determines a rotational speed and a direction based on the determined change in the position of crown 108. In response to determining the change in the position of crown 108, the device rotates object 1402, as indicated by movement direction arrow 1504 and illustrated in FIG. 21-22. The rotation of object 1402 is based on the determined rotational speed and direction.

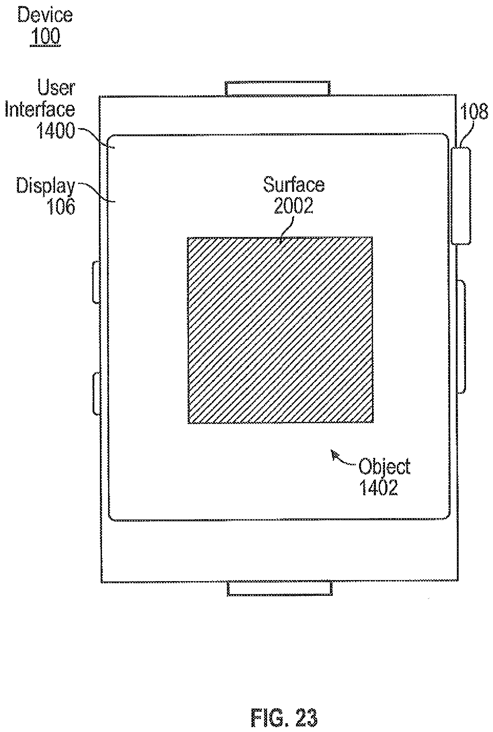

In response to the rotational speed exceeding a threshold, object 1402 flips to cause third surface 2002 to be parallel to display 106 and to be displayed on display 106, as illustrated in FIG. 23. An object is in a steady state when the object is not being translated, rotated, or scaled. When object 1402 is in a steady state, the surface of object 1402 that is parallel to display 106 and displayed on display 106 is determined to be selected. In this example, third surface 2002 is selected.

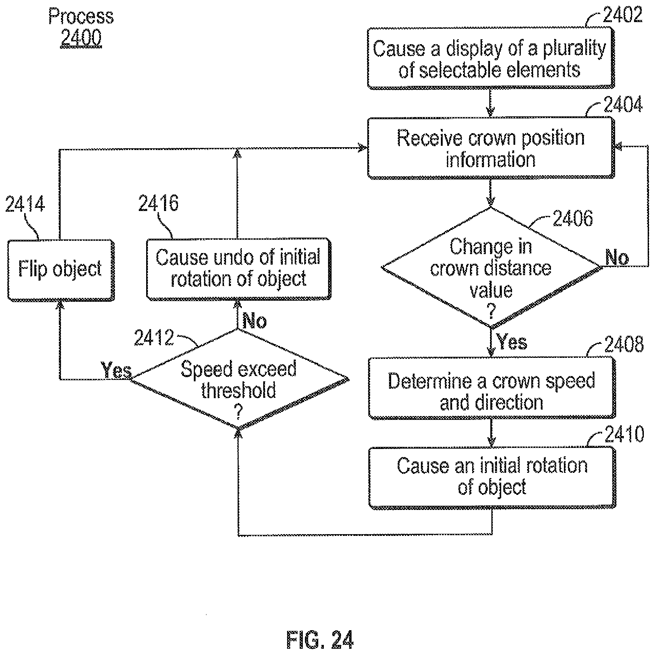

FIG. 24 illustrates an exemplary process for selecting a surface of a multi-sided graphical user interface object in response to a rotation of a crown. Process 2400 is performed at a wearable electronic device (e.g., device 100 in FIG. 1) having a physical crown. In some examples, the electronic device also includes a touch-sensitive display. The process provides an efficient technique for selecting a surface of a multi-sided, three-dimensional object.

At block 2402, the device causes a display of a multi-sided object on a touch-sensitive display of a wearable electronic device. Each selectable surface of the object is associated with a corresponding data value. The data may be, for example, text, an image, an application icon, an instruction, and the like.

At block 2404, the device receives crown position information. The crown position information may be received as a series of pulse signals, real values, integer values, and the like.

At block 2406, the device determines whether a change has occurred in a crown distance value. The crown distance value is based on an angular displacement of the physical crown of the wearable electronic device. A change in the crown distance value is indicative of a user providing input to the wearable electronic device by, for example, turning the physical crown. If the device determines that a change in the crown distance value has not occurred, the system returns to block 2404 and continues receiving crown position information. If the device determines that a change in the crown distance value has occurred, the system continues to block 2408, though the system may continue to receive crown position information.

At block 2408, the device determines a direction and a crown speed. The crown speed is based on the speed of rotation of the physical crown of the wearable electronic device. For example, the determined crown speed may be expressed as hertz, as rotations per unit of time, as rotations per frame, as revolutions per unit of time, as revolutions per frame, and the like. The determined direction is based on a direction of rotation of the physical crown of the wearable electronic device. For example, an up direction can be determined based on a clockwise rotation of the physical crown. Similarly, a down direction can be determined based on a counterclockwise rotation of the physical crown. In other examples, a down direction can be determined based on a clockwise rotation of the physical crown and an up direction can be determined based on a counterclockwise rotation of the physical crown.

At block 2410, in response to determining the change in the crown distance value, the device causes an initial rotation of the multi-sided object on the display. The amount of the rotation is based on the determined crown speed. The direction of rotation is based on the determined direction. The rotation may be animated.

At block 2412, the device determines whether the determined crown speed exceeds a speed threshold. If the device determines that the determined crown speed exceeds the speed threshold, the device continues to block 2414. For example, the speed threshold may be thought of as an escape velocity (or escape speed). An escape velocity is the speed at which the kinetic energy plus the gravitational potential energy of an object is zero. If the device determines that the determined speed does not exceed the speed threshold, the device continues to block 2416.

In some examples, the minimum angular velocity of crown rotation that is necessary to reach escape velocity corresponds directly to the instantaneous angular velocity of crown 108 (FIG. 1), meaning that the user interface of device 100, in essence, responds when crown 108 reaches a sufficient angular velocity. In some embodiments, the minimum angular velocity of crown rotation necessary for reaching the escape velocity is a calculated velocity that is based on, but not directly equal to, the instantaneous ("current") angular velocity of crown 108. In these examples, device 100 can maintain a calculated crown (angular) velocity V in discrete moments in time T according to equation 1:

$$V_T = V_{(T-1)} + \Delta V_{CROWN} - \Delta V_{DRAG}. \tag{EQ. 1}$$

In equation 1, $V_T$ represents a calculated crown velocity (speed and direction) at time T, $V_{(T-1)}$ represents the previous velocity (speed and direction) at time T-1, $\Delta V_{CROWN}$ represents the change in velocity caused by the force being applied through the rotation of the crown at time T, and $\Delta V_{DRAG}$ represents the change in velocity due to a drag force. The force being applied, which is reflected through $\Delta V_{CROWN}$, can depend on the current velocity of angular rotation of the crown. Thus, $\Delta V_{CROWN}$ can also depend on the current angular velocity of the crown. In this way, device 100 can provide user interface interactions based not only on instantaneous crown velocity but also based on user input in the form of crown movement over multiple time intervals, even if those intervals are finely divided. Note, typically, in the absence of user input in the form of $\Delta V_{CROWN}$, $V_T$ will approach (and become) zero based on $\Delta V_{DRAG}$ in accordance with EQ. 1, but $V_T$ would not change signs without user input in the form of crown rotation ($\Delta V_{CROWN}$).

Typically, the greater the velocity of angular rotation of the crown, the greater the value of $\Delta V_{CROWN}$ will be. However, the actual mapping between the velocity of angular rotation of the crown and $\Delta V_{CROWN}$ can be varied depending on the desired user interface effect. For example, various linear or non-linear mappings between the velocity of angular rotation of the crown and $\Delta V_{CROWN}$ can be used.

Also, $\Delta V_{DRAG}$ can take on various values. For example, $\Delta V_{DRAG}$ can depend on the velocity of crown rotation such that at greater velocities, a greater opposing change in velocity ($\Delta V_{DRAG}$) can be produced. In another example, $\Delta V_{DRAG}$ can have a constant value. It should be appreciated that the above-described requirements of $\Delta V_{CROWN}$ and $\Delta V_{DRAG}$ can be changed to produce desirable user interface effects.

As can be seen from EQ. 1, the maintained velocity ($V_T$) can continue to increase as long as $\Delta V_{CROWN}$ is greater than $\Delta V_{DRAG}$. Additionally, $V_T$ can have non-zero values even when no $\Delta V_{CROWN}$ input is being received, meaning that user interface objects can continue to change without the user rotating the crown. When this occurs, objects can stop changing based on the maintained velocity at the time the user stops rotating the crown and the $\Delta V_{DRAG}$ component.

In some examples, when the crown is rotated in a direction corresponding to a rotation direction that is opposite the current user interface changes, the $V_{(T-1)}$ component can be reset to a value of zero, allowing the user to quickly change the direction of the object without having to provide a force sufficient to offset the $V_T$.

At block 2414, the device causes the object to flip past a transition position between a first surface that was last selected and a new surface. For example, the object has flipped past the transition position when the object will not return to having the first surface displayed parallel to the display without receiving additional user input.

Once the object reaches a steady state, the displayed surface that is parallel to the display can be activated through a designated user input. The displayed surface parallel to the display in the steady state is determined to be selected even before activation. An object is in a steady state when the object is not being translated, rotated, or scaled. This may result in the first surface of the object no longer being displayed, in the case of a cube-shaped object.

At block 2416, because the escape velocity has not been reached, the device causes the object to at least partially return to the object's initial position at the time of block 2408. For example, part of the initial rotation of the object caused at block 2410 can be negated. To achieve this, the device animates a rotation of the object that is in an opposite direction of the initial rotation at block 2410.

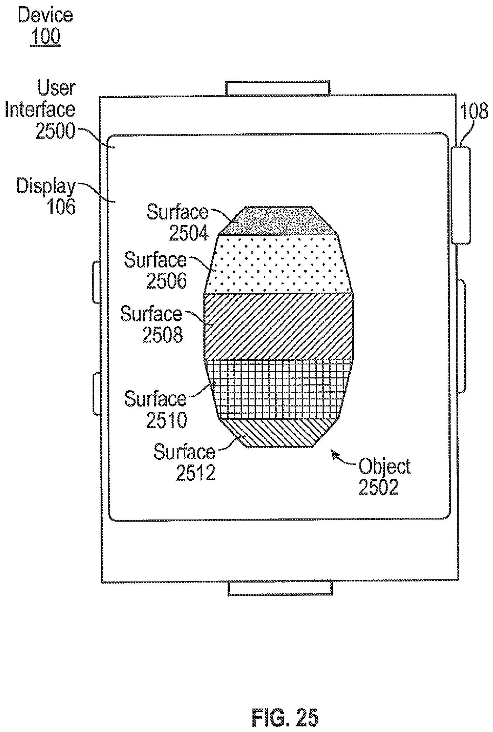

FIG. 25 illustrates a graphical user interface 2500 showing the selection of a surface 2506 of a multi-sided object in response to a rotation of a crown. Object 2502 is a 12-sided rotatable dial, shaped similar to a wheel. Object 2502 is rotatable along a fixed axis. In this example, all 12 surfaces of object 2502 are selectable. These 12 selectable surfaces include surface 2504, surface 2506, surface 2508, surface 2510, and surface 2512. In FIG. 25, surface 2508 is selected because surface 2508 is parallel to display 106 and is displayed on display 106. The selectable surfaces of object 2505 can be selected according to the processes and techniques described in other examples.

In some examples, device 100 can provide haptic feedback based on the content displayed on the display 106. When a user interface object is displayed on display 106, the device can modify the appearance of the object based on a change in a crown distance value received at the device 100 based on a rotation of crown 108. When a criterion is satisfied, a tactile output is output at the device 100.

In one example, the object is a rotatable multi-sided object, such as is described above. The criterion is satisfied when a surface of the multi-sided object is selected. In another example, the criterion is satisfied each time a displayed surface of the multi-sided object passes through a plane parallel to the display.

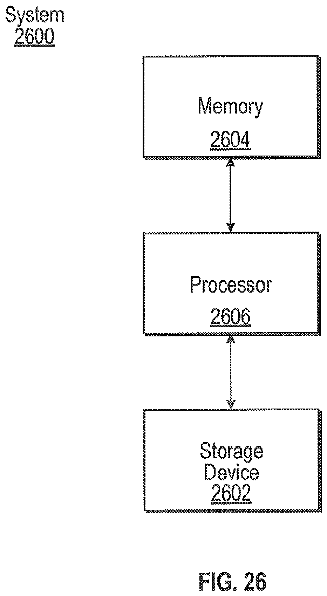

One or more of the functions relating to a user interface can be performed by a system similar or identical to system 2600 shown in FIG. 26. System 2600 can include instructions stored in a non-transitory computer readable storage medium, such as memory 2604 or storage device 2602, and executed by processor 2606. The instructions can also be stored and/or transported within any non-transitory computer readable storage medium for use by or in connection with an instruction execution system, apparatus, or device, such as a computer-based system, processor-containing system, or other system that can fetch the instructions from the instruction execution system, apparatus, or device and execute the instructions. In the context of this document, a "non-transitory computer readable storage medium" can be any medium that can contain or store the program for use by or in connection with the instruction execution system, apparatus, or device. The non-transitory computer readable storage medium can include, but is not limited to, an electronic, magnetic, optical, electromagnetic, infrared, or semiconductor system, apparatus or device, a portable computer diskette (magnetic), a random access memory (RAM), a read-only memory (ROM), an erasable programmable read-only memory (EPROM) (magnetic), a portable optical disc such a CD, CD-R, CD-RW, DVD, DVD-R, or DVD-RW, or flash memory such as compact flash cards, secured digital cards, USB memory devices, memory sticks, and the like.

The instructions can also be propagated within any transport medium for use by or in connection with an instruction execution system, apparatus, or device, such as a computer-based system, processor-containing system, or other system that can fetch the instructions from the instruction execution system, apparatus, or device and execute the instructions. In the context of this document, a "transport medium" can be any medium that can communicate, propagate or transport the program for use by or in connection with the instruction execution system, apparatus, or device. The transport medium can include, but is not limited to, an electronic, magnetic, optical, electromagnetic or infrared wired or wireless propagation medium.

In some examples, system 2600 can be included within device 100. In these examples, processor 2606 can be the same or a different process than processor 202. Processor 2606 can be configured to receive the output from encoder 204, buttons 110, 112, and 114, and from touch-sensitive display 106. Processor 2606 can process these inputs as described above with respect to the processes described and illustrated. It is to be understood that the system is not limited to the components and configuration of FIG. 26, but can include other or additional components in multiple configurations according to various examples.

Although the disclosure and examples have been fully described with reference to the accompanying drawings, it is to be noted that various changes and modifications will become apparent to those skilled in the art.

## Claims

1. A computer-implemented method implemented on a wearable electronic device (100) comprising:

    displaying a user interface in a first state;
    while displaying the user interface in the first state, detecting an input that includes a rotation of the physical crown (108) of the wearable electronic device (100) in a first direction;
    determining a speed of the rotation in the first direction, wherein the speed is based on an angular velocity of the physical crown (108) during the detected rotation;
    in response to detecting the input that includes a rotation of the physical crown (108) in the first direction, displaying, on a display, an animation starting a transition of the user interface from the first state to a second state; and
    after starting the transition of the user interface from the first state to the second state and while continuing to detect the input that includes rotation of the physical crown in the first direction:

        in accordance with a determination that the speed of the rotation of the physical crown (108) in the first direction during the input exceeds a speed threshold, displaying, on the display, a transition of the user interface to the second state;
        in accordance with a determination that the speed of the rotation of the physical crown (108) in the first direction during the input exceeds the speed threshold after the transition to the second state, displaying, on the display, a transition of the user interface to a third state; and
        in accordance with a determination that the speed of the rotation of the physical crown (108) in the first direction during the input is below the speed threshold before the transition to the second state, displaying, on the display, a transition of the user interface back towards the first state.

2. The method of claim 1, wherein the transition of the user interface from the first state to the second state comprises an animation of translating, in a second direction, a surface of the first state and a surface of the second state.

3. The method of any of claims 1-2, wherein the transition of the user interface back towards the first state comprises an animation of translating, in a third direction opposite to the second direction, a surface of the first state and a surface of the second state.

4. The method of any of claims 1-3, wherein the transition of the user interface from the first state to the second state includes displaying, on the display, the second state and at least a portion of the first state, wherein a display area of the second state is larger than a display area of the at least the portion of the first state.

5. The method of any of claims 1-4, wherein the transition of the user interface back towards the first state includes displaying, on the display, the first state and at least a portion of the second state, wherein a display area of the first state is larger than a display area of the at least the portion of the second state.

6. The method of any of claims 1-5, further comprising:

associating the first state with a first data;
associating the second state with a second data, wherein the first data and the second data are different; and
in response to the speed of the rotation of the crown (108) during the input exceeding the speed threshold, displaying the second data at a location corresponding to the second state without displaying the first data.

7. The method of any of claims 1-6, further comprising:

associating the first state with a first data;
associating the second state with a second data, wherein the first data and the second data are different; and
in response to the speed of the rotation of the crown (108) during the input not exceeding the speed threshold, displaying the first data at a location corresponding to the first state without displaying the second data.

8. The method of any of claims 1-7, further comprising:

while the second state is displayed, detecting a user input on a
touch-sensitive surface of the wearable electronic device (100) at a location corresponding to the second state; and
in response to detecting the user input, selecting the second state.

9. The method of any of claims 1-8, further comprising:

detecting a user input corresponding to a second rotation of the physical crown (108) while displaying the user interface; and
in response to detecting the user input corresponding to a second rotation, generating a haptic output.

10. The method of any of claims 1-9, wherein the physical crown (108) is a mechanical crown.

11. The method of any of claims 1-10, wherein:

determining the speed of the rotation of the physical crown (108) includes determining the angular velocity of the rotation of the physical crown (108),
the determination that the speed of the rotation of the physical crown (108) during the input exceeds the speed threshold includes a determination that the angular velocity of the rotation of the physical crown (108) during the input exceeds an angular velocity threshold,
the determination that the speed of the rotation of the physical crown (108) during the input exceeds the speed threshold after the transition to the second state includes a determination that the angular velocity of the rotation of the physical crown (108) during the input exceeds the angular velocity threshold, and
the determination that the speed of the rotation of the physical crown (108) during the input is below the speed threshold before the transition to the second state includes a determination that the angular velocity of the rotation of the physical crown (108) during the input is below the first angular velocity threshold.

12. A computer-readable storage medium storing one or more programs configured to be executed by one or more processors of an electronic device (100) with a physical crown (108), a display, and a touch-sensitive surface, the one or more programs including instructions for performing the method of any of claims 1-11.

13. An electronic device (100) comprising:

one or more processors (202);
a physical crown (108) operatively coupled to the one or more processors (202);
a display (106) operatively coupled to the one or more processors (202); and
a touch-sensitive surface operatively coupled to the one or more processors (202), the one or more processors (202) configured to perform the method of any of claims 1-11.

**Patentansprüche**

1. Computerimplementiertes Verfahren, das auf einer tragbaren elektronischen Vorrichtung (100) implementiert ist, umfassend:

   Anzeigen einer Benutzerschnittstelle in einem ersten Zustand;
   während des Anzeigens der Benutzerschnittstelle im ersten Zustand, Erfassen einer Eingabe, die eine Drehung der physischen Krone (108) der tragbaren elektronischen Vorrichtung (100) in einer ersten Richtung beinhaltet;
   Bestimmen einer Geschwindigkeit der Drehung in der ersten Richtung, wobei die Geschwindigkeit auf einer Winkelgeschwindigkeit der physischen Krone (108) während der erfassten Drehung basiert;
   als Reaktion auf das Erfassen der Eingabe, die eine Drehung der physischen Krone (108) in der ersten Richtung beinhaltet, Anzeigen, auf einer Anzeige, einer Animation, die einen Übergang der Benutzerschnittstelle vom ersten Zustand in einen zweiten Zustand startet; und
   nach dem Starten des Übergangs der Benutzerschnittstelle vom ersten Zustand in den zweiten Zustand und während des Fortsetzens des Erfassens der Eingabe, die eine Drehung der physischen Krone in der ersten Richtung beinhaltet:

      gemäß einer Bestimmung, dass die Geschwindigkeit der Drehung der physischen Krone (108) in der ersten Richtung während der Eingabe einen
      Geschwindigkeitsschwellenwert überschreitet, Anzeigen, auf der Anzeige, eines Übergangs der Benutzerschnittstelle in den zweiten Zustand;
      gemäß einer Bestimmung, dass die Geschwindigkeit der Drehung der physischen Krone (108) in der ersten Richtung während der Eingabe den Geschwindigkeitsschwellenwert nach dem Übergang in den zweiten Zustand überschreitet, Anzeigen, auf der Anzeige, eines Übergangs der Benutzerschnittstelle in einen dritten Zustand; und
      gemäß einer Bestimmung, dass die Geschwindigkeit der Drehung der physischen Krone (108) in der ersten Richtung während der Eingabe unter dem
      Geschwindigkeitsschwellenwert vor dem Übergang in den zweiten Zustand liegt, Anzeigen, auf der Anzeige, eines Übergangs der Benutzerschnittstelle zurück in den ersten Zustand.

2. Verfahren nach Anspruch 1, wobei der Übergang der Benutzerschnittstelle vom ersten Zustand in den zweiten Zustand eine Animation des Übergehens, in einer zweiten Richtung, einer Oberfläche des ersten Zustands und einer Oberfläche des zweiten Zustands umfasst.

3. Verfahren nach einem der Ansprüche 1-2, wobei der Übergang der Benutzerschnittstelle zurück in den ersten Zustand eine Animation des Übergehens, in einer dritten Richtung entgegengesetzt zur zweiten Richtung, einer Oberfläche des ersten Zustands und einer Oberfläche des zweiten Zustands umfasst.

4. Verfahren nach einem der Ansprüche 1-3, wobei der Übergang der Benutzerschnittstelle vom ersten Zustand in den zweiten Zustand das Anzeigen, auf der Anzeige, des zweiten Zustands und mindestens eines Abschnitts des ersten Zustands beinhaltet, wobei eine Anzeigefläche des zweiten Zustands größer als eine Anzeigefläche des mindestens einen Abschnitts des ersten Zustands ist.

5. Verfahren nach einem der Ansprüche 1-4, wobei der Übergang der Benutzerschnittstelle zurück in den ersten Zustand das Anzeigen, auf der Anzeige, des ersten Zustands und mindestens eines Abschnitts des zweiten Zustands beinhaltet, wobei eine Anzeigefläche des ersten Zustands größer als eine Anzeigefläche des mindestens einen Abschnitts des zweiten Zustands ist.

6. Verfahren nach einem der Ansprüche 1-5, ferner umfassend:

   Zuordnen des ersten Zustands zu ersten Daten;
   Zuordnen des zweiten Zustands zu zweiten Daten, wobei sich die ersten Daten und die zweiten Daten unterscheiden; und
   als Reaktion darauf, dass die Geschwindigkeit der Drehung der Krone (108) während der Eingabe den Geschwindigkeitsschwellenwert überschreitet, Anzeigen der zweiten Daten an einer Stelle, die dem zweiten Zustand entspricht, ohne die ersten Daten anzuzeigen.

7. Verfahren nach einem der Ansprüche 1-6, ferner umfassend:

Zuordnen des ersten Zustands zu ersten Daten;

Zuordnen des zweiten Zustands zu zweiten Daten, wobei sich die ersten Daten und die zweiten Daten unterscheiden; und

als Reaktion darauf, dass die Geschwindigkeit der Drehung der Krone (108) während der Eingabe den Geschwindigkeitsschwellenwert nicht überschreitet, Anzeigen der ersten Daten an einer Stelle, die dem ersten Zustand entspricht, ohne die zweiten Daten anzuzeigen.

8. Verfahren nach einem der Ansprüche 1-7, ferner umfassend:
während der zweite Zustand angezeigt wird, Erfassen einer Benutzereingabe auf einer berührungsempfindlichen Oberfläche der tragbaren elektronischen Vorrichtung (100) an einer Stelle, die dem zweiten Zustand entspricht; und als Reaktion auf das Erfassen der Benutzereingabe, Auswählen des zweiten Zustands.

9. Verfahren nach einem der Ansprüche 1-8, ferner umfassend:

Erfassen einer Benutzereingabe, die einer zweiten Drehung der physischen Krone (108) entspricht, während des Anzeigens der Benutzerschnittstelle; und
als Reaktion auf das Erfassen der Benutzereingabe, die einer zweiten Drehung entspricht, Erzeugen einer haptischen Ausgabe.

10. Verfahren nach einem der Ansprüche 1-9, wobei die physische Krone (108) eine mechanische Krone ist.

11. Verfahren nach einem der Ansprüche 1-10, wobei:

das Bestimmen der Geschwindigkeit der Drehung der physischen Krone (108) das Bestimmen der Winkelgeschwindigkeit der Drehung der physischen Krone (108) beinhaltet,
die Bestimmung, dass die Geschwindigkeit der Drehung der physischen Krone (108) während der Eingabe den Geschwindigkeitsschwellenwert überschreitet, eine Bestimmung beinhaltet, dass die Winkelgeschwindigkeit der Drehung der physischen Krone (108) während der Eingabe einen Winkelgeschwindigkeitsschwellenwert überschreitet,
die Bestimmung, dass die Geschwindigkeit der Drehung der physischen Krone (108) während der Eingabe den Geschwindigkeitsschwellenwert nach dem Übergang in den zweiten Zustand überschreitet, eine Bestimmung beinhaltet, dass die Winkelgeschwindigkeit der Drehung der physischen Krone (108) während der Eingabe den Winkelgeschwindigkeitsschwellenwert überschreitet, und
die Bestimmung, dass die Geschwindigkeit der Drehung der physischen Krone (108) während der Eingabe unter dem Geschwindigkeitsschwellenwert vor dem Übergang in den zweiten Zustand liegt, eine Bestimmung beinhaltet, dass die Winkelgeschwindigkeit der Drehung der physischen Krone (108) während der Eingabe unter dem ersten Winkelgeschwindigkeitsschwellenwert liegt.

12. Computerlesbares Speichermedium, das ein oder mehrere Programme speichert, die konfiguriert sind, um von einem oder mehreren Prozessoren einer elektronischen Vorrichtung (100) mit einer physischen Krone (108), einer Anzeige und einer berührungsempfindlichen Oberfläche ausgeführt zu werden, wobei das eine oder die mehreren Programme Anweisungen zum Durchführen des Verfahrens nach einem der Ansprüche 1-11 beinhalten.

13. Elektronische Vorrichtung (100), umfassend:

einen oder mehrere Prozessoren (202);
eine physische Krone (108), die mit dem einen oder den mehreren Prozessoren (202) wirkverbunden ist;
eine Anzeige (106), die mit dem einen oder den mehreren Prozessoren (202) wirkverbunden ist; und
eine berührungsempfindliche Oberfläche, die mit dem einen oder den mehreren Prozessoren (202) wirkverbunden ist, wobei der eine oder die mehreren Prozessoren (202) konfiguriert sind, um das Verfahren nach einem der Ansprüche 1-11 durchzuführen.

**Revendications**

1. Un procédé mis en œuvre par calculateur, implémenté sur un dispositif électronique à porter sur soi (100), comprenant :

l'affichage d'une interface utilisateur dans un premier état ;

pendant l'affichage de l'interface utilisateur dans le premier état, la détection d'une entrée qui inclut une rotation de la couronne physique (108) du dispositif électronique à porter sur soi (100) dans une première direction ;

la détermination d'une vitesse de rotation dans la première direction, la vitesse étant basée sur une vitesse angulaire de la couronne physique (108) pendant la rotation détectée ;

en réponse à la détection de l'entrée qui inclut une rotation de la couronne physique (108) dans la première direction, l'affichage, sur un afficheur, d'une animation commençant une transition de l'interface utilisateur du premier état à un second état ; et

après commencement de la transition de l'interface utilisateur du premier état au second état et tout en continuant à détecter l'entrée qui inclut la rotation de la couronne physique dans la première direction :

suite à une détermination que la vitesse de la rotation de la couronne physique (108) dans la première direction pendant l'entrée dépasse un seuil de vitesse, l'affichage, sur l'afficheur, d'une transition de l'interface utilisateur au second état ;

suite à une détermination que la vitesse de rotation de la couronne physique (108) dans la première direction pendant l'entrée dépasse le seuil de vitesse après la transition au second état, l'affichage, sur l'afficheur, d'une transition de l'interface utilisateur à un troisième état ; et

suite à une détermination que la vitesse de la rotation de la couronne physique (108) dans la première direction pendant l'entrée est au-dessous du seuil de vitesse avant la transition au second état, l'affichage, sur l'afficheur, d'une transition de l'interface utilisateur en retour vers le premier état.

2. Le procédé de la revendication 1, dans lequel la transition de l'interface utilisateur du premier état au second état comprend une animation d'une translation, dans une seconde direction, d'une surface du premier état et d'une surface du second état.

3. Le procédé de l'une des revendications 1 à 2, dans lequel la transition de l'interface utilisateur en retour vers le premier état comprend une animation de translation, dans une troisième direction opposée à la seconde direction, d'une surface du premier état et d'une surface du second état.

4. Le procédé de l'une des revendications 1 à 3, dans lequel la transition de l'interface utilisateur du premier état au second état inclut l'affichage, sur l'afficheur, du second état et d'au moins une partie du premier état, une zone d'affichage du second état étant plus grande qu'une zone d'affichage de l'au moins une partie du premier état.

5. Le procédé de l'une des revendications 1 à 4, dans lequel la transition de l'interface utilisateur en retour vers le premier état comprend l'affichage, sur l'afficheur, du premier état et d'au moins une partie du second état, une zone d'affichage du premier étant plus grande qu'une zone d'affichage de l'au moins une partie du second état.

6. Le procédé de l'une des revendications 1 à 5, comprenant en outre :

l'association du premier état à une première donnée ;

l'association du second état à une seconde donnée, la première donnée et la seconde donnée étant différentes ; et

en réponse au dépassement du seuil de vitesse par la vitesse de rotation de la couronne (108) pendant l'entrée, l'affichage de la seconde donnée en un emplacement correspond au second état, sans affichage de la première donnée.

7. Le procédé de l'une des revendications 1 à 6, comprenant en outre :

l'association du premier état à une première donnée ;

l'association du second état à une seconde donnée, la première donnée et la seconde donnée étant différentes ; et

en réponse au fait que la vitesse de rotation de la couronne (108) pendant l'entrée ne dépasse pas le seuil de vitesse, l'affichage de la première donnée en un emplacement correspondant au premier état, sans affichage de la seconde donnée.

8. Le procédé de l'une des revendications 1 à 7, comprenant en outre :

pendant que le second état est affiché, la détection d'une entrée utilisateur sur une surface sensible au toucher du dispositif électronique à porter sur soi (100) en un emplacement correspondant au second état ; et
en réponse à la détection de l'entrée utilisateur, la sélection du second état.

9. Le procédé de l'une des revendications 1 à 8, comprenant en outre :

la détection d'une entrée utilisateur correspondant à une seconde rotation de la couronne physique (108) pendant l'affichage de l'interface utilisateur ; et
en réponse à la détection de l'entrée utilisateur correspondant à une seconde rotation, la génération d'une sortie haptique.

10. Le procédé de l'une des revendications 1 à 9, dans lequel la couronne physique (108) est une couronne mécanique.

11. Le procédé de l'une des revendications 1 à 10, dans lequel :

la détermination de la vitesse de rotation de la couronne physique (108) comprend la détermination de la vitesse angulaire de la rotation de la couronne physique (108),
la détermination que la vitesse de la rotation de la couronne physique (108) pendant l'entrée dépasse le seuil de vitesse comprend une détermination que la vitesse angulaire de la rotation de la couronne physique (108) pendant l'entrée dépasse un seuil de vitesse angulaire,
la détermination que la vitesse de la rotation de la couronne physique (108) pendant l'entrée dépasse le seuil de vitesse après la transition au second état comprend une détermination que la vitesse angulaire de la rotation de la couronne physique (108) pendant l'entrée dépasse le seuil de vitesse angulaire, et
la détermination que la vitesse de la rotation de la couronne physique (108) pendant l'entrée est au-dessous du seuil de vitesse avant la transition au second état comprend une détermination que la vitesse angulaire de la rotation de la couronne physique (108) pendant l'entrée est au-dessous du premier seuil de vitesse angulaire.

12. Un support de stockage lisible par calculateur stockant un ou plusieurs programmes configurés pour être exécutés par un ou plusieurs processeurs d'un dispositif électronique (100) avec une couronne physique (108), un afficheur, et une surface sensible au toucher, les un ou plusieurs programmes comprenant des instructions pour mettre en œuvre le procédé de l'une des revendications 1 à 11.

13. Un dispositif électronique (100) comprenant :

un ou plusieurs processeurs (202) ;
une couronne physique (108) couplée de manière opérante aux un ou plusieurs processeurs (202) ;
un afficheur (106) couplé de manière opérante aux un ou plusieurs processeurs (202) ; et
une surface sensible au toucher couplée de manière opérante aux un ou plusieurs processeurs (202), les un ou plusieurs processeurs (202) étant configurés pour mettre en œuvre le procédé de l'une des revendications 1 à 11.

100

FIG. 1

Device
100

Buttons
110/112/114

Processor
202

Encoder
204

Crown
108

Display
106

FIG. 2

Device
100

User
Interface
300

Display
106

Surface
304

108

Object
302

FIG. 3

Device
100

User
Interface
300

108

Rotation
Direction
308

Display
106

Surface
304

Movement
Direction
310

Object
302

FIG. 4

Device
100

User
Interface
300

Display
106

108

Rotation
Direction
308

Surface
304

Movement
Direction
310

Object
302

FIG. 5

FIG. 6

Device
100

User
Interface
300

Display
106

108

Rotation
Direction
308

Surface
304

Movement
Direction
310

Object
302

FIG. 7

Device
100

User
Interface
300

Display
106

Surface
306

108

Rotation
Direction
308

Movement
Direction
310

Object
302

FIG. 8

Device
100

User
Interface
300

Display
106

108

Surface
306

Movement
Direction
310

Object
302

FIG. 9

Device
**100**

User
Interface
**300**

Display
**106**

108

Surface
306

Movement
Direction
310

Object
302

FIG. 10

FIG. 11

Device
100

User
Interface
300

Display
106

Surface
306

108

Object
302

FIG. 12

Process
1300

Cause a display of a plurality
of selectable elements ⌐1302

Receive crown position
information ⌐1304

Change in
crown distance
value
? ⌐1306 No

Yes

Determine a crown speed
and direction ⌐1308

Cause an initial rotation
of object ⌐1310

1314

Flip object

1316

Cause undo of initial
rotation of object

No

1312⌐

Yes

Speed exceed
threshold
?

FIG. 13

28

FIG. 14

FIG. 15

Device
100

User
Interface
1400

108

Display
106

Surface
1406

Rotation
Direction
1502

Movement
Direction
1504

Surface
1404

Object
1402

FIG. 16

Device
100

User
Interface
1400

Display
106

Surface
1406

108

Movement
Direction
1504

Surface
1404

Object
1402

FIG. 17

Device
100

User
Interface
1400

Display
106

Surface
1406

108

Movement
Direction
1504

Object
1402

FIG. 18

Device
100

User
Interface
1400

Display
106

Surface
1406

Object
1402

108

FIG. 19

**FIG. 20**

Device
100

User
Interface
1400

108

Display
106

Rotation
Direction
1502

Surface
2002

Movement
Direction
1504

Surface
1406

Object
1402

FIG. 21

Device
100

User
Interface
1400

Display
106

108

Surface
2002

Movement
Direction
1504

Surface
1406

Object
1402

FIG. 22

Device
100

User
Interface
1400

Display
106

108

Surface
2002

Object
1402

FIG. 23

Process
**2400**

Cause a display of a plurality
of selectable elements ⌐2402

Receive crown position
information ⌐2404

Change in
crown distance
value
? ⌐2406 → **No**

**Yes** ⌐2408
Determine a crown speed
and direction

Cause an initial rotation
of object ⌐2410

Speed exceed
threshold
? 2412 — **No**

**Yes**

Cause undo of initial
rotation of object 2416

Flip object 2414

FIG. 24

Device
100

User
Interface
2500

Display
106

Surface
2504

Surface
2506

Surface
2508

Surface
2510

Surface
2512

Object
2502

108

FIG. 25

System
2600

Memory

2604

Processor

2606

Storage
Device
2602

FIG. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61873356
- US 61873359
- US 61959851
- US 61873360

- US 47665714
- US 61747278
- US 5477508 A